# DEMANDE DE BREVET EUROPEEN

(11) **EP 4 470 385 A1**
(43) Date de publication de la demande: **04.12.2024**
(21) Numéro de dépôt: 24179664.8
(22) Date de dépôt: 03.06.2024
(51) Int. Cl.: A23D 7/00, A23D 7/005, A23D 7/02, A23L 29/00, A23L 29/30, A23C 15/12

(54) **PROCEDE D'OBTENTION D'UNE EMULSION EAU-DANS-HUILE COMESTIBLE**

(30) Priorité: 02.06.2023 FR 2305540
(71) Demandeur: St. Hubert, 94150 Rungis (FR)
(72) Inventeur: FEESER, Marion, 54000 34 rue Turinaz, Nancy (FR); FERRIERES, Mathieu, 88000 4 quai des bons enfants, Epinal (FR); LEMOIS, Béatrice, 54380 32 rue Paul Lombard, Bezaumont (FR); PREVOT, Eulalie, 54180 42 rue de Sèvres, Heillecourt (FR)
(74) Mandataire: Barbot, Willy

(57) **Abrégé**

La présente invention est relative à un procédé d'obtention d'une émulsion eau-dans-huile comprenant les étapes de :
(i) Préparation d'une phase grasse dont la teneur en matières grasses laitières inférieure à 100% (en poids par rapport au poids total de la phase grasse) ;
(ii) Préparation d'une phase aqueuse ;
(iii) Incorporation de la phase aqueuse obtenue à l'étape (ii) dans la phase grasse obtenue à l'étape (i) sous agitation pour créer une émulsion ; et
(iv) Cristallisation de l'émulsion pasteurisée à l'étape (iii) ; avec
Une étape complémentaire d'incorporation d'une solution fermentée par au moins un ferment lactique, d'au moins un substrat à base de glucides.

## Description

### Domaine de l'invention

La présente invention est relative au domaine des émulsions eau-dans-huile comestibles à base d'huiles végétales.

### Arrière-plan technologique de l'invention

La société actuelle est particulièrement sensibilisée aux problèmes de santé conditionnés par le mode de vie.

Face à cette évolution du comportement de ses consommateurs, l'industrie agroalimentaire cherche à développer des produits innovants qui favorisent la santé des individus.

Typiquement, les produits nouvellement commercialisés voient souvent leur teneur en lipides ou en matière grasse diminuer, dans le but de limiter les risques d'obésité, de maladie cardiovasculaire ou encore de diabète, et leur contenu en matière grasse animale diminuer ou disparaître, dans le but de ne pas dépendre d'élevages.

Cette évolution a contribué ainsi à une augmentation de la consommation de matières tartinables de type margarine, à base d'huiles végétales, en substitution du beurre.

Maintenant, cette transition est parfois rendue difficile pour le consommateur. En effet, ces deux types de matières grasses tartinables (margarine et beurre) présentent des compositions en acide gras (notamment saturés), bien différentes, ce qui contribuent à leur donner des caractéristiques sensorielles (goût, texture, tartinabilité, ...) bien différentes.

Pour faire face à cette problématique, les industriels intègrent à leur margarine des arômes.

Maintenant, les propriétés organoleptiques de ces margarines restent assez éloignées du beurre et se pose le problème de développer de nouvelles matières tartinables qui soient allégées en matière grasse et, notamment, en acides gras saturés, le tout en maintenant de bonnes propriétés organoleptiques, ce qui ne constitue en aucun cas une sinécure.

### Sommaire de l'invention

Les inventeurs ont mis en évidence que l'incorporation, à des matières grasses tartinables essentiellement à base d'huiles végétales, d'une solution fermentée par des ferments lactiques d'un substrat à base de glucides permet d'obtenir des émulsions eau-dans-huile dont les propriétés organoleptiques sont particulièrement intéressantes et dont certaines émulsions présentaient des saveurs les rapprochant fortement du beurre, même sans ajout d'arômes.

A noter, en outre, que les émulsions obtenues par le procédé selon l'invention ont révélé une meilleure fermeté, un moindre collant et un meilleur fondant.

La présente invention est relative à un procédé d'obtention d'une émulsion eau-dans-huile, ledit procédé comprenant les étapes de :
(i) Préparation d'une phase grasse ;
(ii) Préparation d'une phase aqueuse ;
(iii) Incorporation de la phase aqueuse obtenue à l'étape (ii) dans la phase grasse obtenue à l'étape (i) sous agitation pour créer une émulsion ; et
(iv) Cristallisation de l'émulsion obtenue à l'étape (iii) ;

**Caractérisé en ce que :**
- le procédé comprend en outre au moins une étape d'incorporation d'une solution fermentée par au moins un ferment lactique, d'au moins un substrat à base de glucides ; et
- la phase grasse présente une teneur en matières grasses laitières inférieure à 100% (en poids par rapport au poids total de la phase grasse).

Avantageusement, le procédé selon l'invention n'intègre pas d'étape d'incorporation d'un ou plusieurs arômes.

La présente invention est également relative à une émulsion eau-dans-huile susceptible d'être obtenue par un tel procédé qui incorpore une solution fermentée par au moins un ferment lactique, d'au moins un substrat à base de glucides.

Enfin, l'invention porte sur l'utilisation d'une solution fermentée par au moins un ferment lactique, d'au moins un substrat à base de glucides, pour l'obtention d'une émulsion eau-dans-huile dont la phase grasse présente une teneur en matières grasses laitières inférieure à 100% (en poids par rapport au poids total de la phase grasse).

Avantageusement, ladite utilisation est obtenue par l'incorporation dans l'émulsion de ladite solution fermentée se fait au cours de la cristallisation ou après celle-ci.

### Description détaillée de l'invention

Les émulsions eau-dans-huile obtenues par le procédé de l'invention sont comestibles.

Typiquement, les émulsions eau-dans-huile obtenues présentent une teneur en matière grasse comprise entre 20 et 95% (en poids par rapport au poids total de l'émulsion), de préférence entre 25 et 90%, notamment entre 30 et 70%, et de manière particulièrement préférée entre 35 et 60%.

De manière préférentielle, le procédé de l'invention permet d'obtenir des émulsions eau-dans-huile de type matières grasses tartinables et, notamment, des margarines.

Les émulsions eau-dans-huile obtenues présentent une consistance solide à 20°C.

Par « matière grasse tartinable », on entend, un mélange d'eau et des matières grasses laitières, animales et/ou végétales, de préférence des matières grasses laitières et/ou végétales. Des exemples de telles matières grasses tartinables sont par exemple le beurre et la margarine. Les matières grasses tartinables selon l'invention pourront être consommées crues ou être utilisées par la cuisson ou la pâtisserie.

Les matières grasses tartinables telles que définies par le règlement (CE) n°2991/94) sont des produits dont la teneur en matières grasses est de 10 % minimum et de 90 % maximum de leur poids total et qui gardent une consistance solide à 20 ° C.

La matière grasse de la phase grasse peut être une matière grasse unique ou une combinaison de matières grasses.

La matière grasse ou le mélange de matières grasses peut comprendre des matières grasses animales et/ou des matières grasses végétales et/ou des matières grasses laitières ; lesquelles peuvent être hydrogénées, interestérifiées, ou fractionnées.

Les matières grasses laitières adaptées comprennent le beurre, la crème, la crème fraîche, la MGLA (Matière Grasse Laitière Anhydre) ou encore les fractions de beurre comme l'oléine ou la stéarine de beurre.

Les matières grasses végétales adaptées peuvent être choisies dans le groupe (i) des huiles (matière grasse liquide à température ambiante) comprenant l'huile de tournesol, l'huile de soja, l'huile de colza, l'huile de maïs, l'huile de lin, ainsi que toute autre huile alimentaire, ou dans le groupe (ii) des graisses (matière grasse solide à température ambiante) comprenant l'huile de palmiste, l'huile de palme, l'huile de coprah,le beurre de karité ainsi que toute autre graisse alimentaire ; leurs fractions, ou des combinaisons de celles-ci.

Les matières grasses préférées selon l'invention comprennent des acides gras polyinsaturés (PUFA). Les PUFA préférés sont les oméga-3 et les oméga-6 tels que l'acide alpha linoléique (ALA), l'acide docosahexaénoïque (DHA) et l'acide eicosapentaénoïque (EPA).

De préférence, la phase grasse de l'émulsion selon l'invention comprend des oméga-3.

Avantageusement, la phase grasse présente une teneur en matières grasses végétales d'au moins 33%, par exemple d'au moins 40% (en poids par rapport au poids total de la phase grasse), de préférence d'au moins 50% et, de manière particulièrement préférée d'au moins 60%.

Comme précisé précédemment, cette phase grasse présente une teneur en matières grasses laitières inférieure à 100% (en poids par rapport au poids *total* de la phase grasse), de préférence inférieure ou égale à 50%.

Maintenant, et selon un mode de réalisation particulier, la phase grasse ne présente pas de matières grasses laitières.

En outre, la phase grasse peut comprendre des émulsifiants pour favoriser la dispersion de la phase aqueuse dans la phase grasse à l'étape (iii) du procédé selon l'invention.

Les émulsifiants pouvant être utilisés sont bien connus de l'homme du métier.

Les émulsifiants utilisés sont de manière préférée des émulsifiants pour les émulsions eau-dans-huile, de manière encore préférée, choisis dans le groupe comprenant les monoglycérides distillés, les esters d'acide citrique de monoglycérides, les esters diacétyl acétique de monoglycérides, les esters d'acide lactique de monoglycérides, les mono- et diglycérides, les esters de polyglycérols d'acides gras, les esters de sorbitan d'acides gras ou des lécithines.

Typiquement, la phase grasse contient moins de 10% en poids d'émulsifiants (par rapport au poids de total de la phase grasse), de préférence de 0,5 à 6% et, de manière particulièrement préférée moins de 5%.

En outre, la phase grasse peut également contenir d'autres composés hydrophobes tel que des arômes, des colorants et des vitamines.

Selon l'invention, la phase grasse contient typiquement moins de 5% en poids d'arômes (par rapport au poids total de la phase grasse), préférentiellement moins de 1% en poids d'arômes.

Selon l'invention, la phase grasse contient typiquement moins de 5% en poids de colorants (par rapport au poids total de la phase grasse), préférentiellement moins de 1%.

L'étape (i) de préparation de la phase grasse est réalisée par des techniques bien connues de l'homme du métier et se fait typiquement sous agitation.

L'agitation est de préférence effectuée par un mélangeur à pâles ou par tout autre système permettant de répondre aux exigences du mélange.

La température de préparation est généralement comprise entre 50 et 70°C, préférentiellement 60 et 68°C.

La phase aqueuse est principalement constituée d'eau pure.

Maintenant, la phase aqueuse peut aussi contenir d'autres composés hydrophiles tels que des arômes, des texturants (ex : épaississants ou gélifiants), des conservateurs (ex : antioxydants), des vitamines, des correcteurs d'acidité, des protéines ou encore du sel.

Le pH de la phase aqueuse peut être ajusté à la valeur désirée, entre autres pour influencer l'impression de goût acide ou basique et pour influencer la stabilité microbienne. De manière préférée, le pH de la phase aqueuse dans l'émulsion de l'invention est compris entre 3 et 7, de préférence entre 3,8 et 5,5.

L'étape (ii) de préparation de la phase aqueuse est réalisée là encore par des techniques bien connues de l'homme du métier (ex : sous agitation). Typiquement, cette étape est réalisée avec un mélangeur à pâles ou par tout autre système permettant de répondre aux exigences du mélange (défloculeuse, hélice, ...).

La température de préparation est en général comprise entre 45 et 65 °C, préférentiellement entre 50 et 60°C.

L'étape (ii) peut être réalisée en parallèle de l'étape (i), après celle-ci ou préalablement à celle-ci.

L'étape (iii) d'incorporation de la phase aqueuse dans la phase grasse est effectuée sous agitation forte pour réaliser une émulsion, par exemple à l'aide d'un agitateur à pâles ou par une injection en continu.

De manière optionnelle, des protéines peuvent être ajoutées à l'émulsion de l'invention.

L'étape (iv) de cristallisation de l'émulsion correspond à un refroidissement de l'émulsion de sorte à permettre sa solidification.

Cette étape est réalisée par des techniques bien connues de l'homme du métier et peut intégrer un pré-refroidissement de l'émulsion (de sorte à obtenir un produit à une température inférieure à 50°C, de préférence inférieure à 40°C). En outre, cette étape peut intégrer une mise en pression de l'émulsion pour faciliter la cristallisation en continue de celle-ci (de l'ordre de 1 à 6 MPa, de préférence de 1,5 à 4,5MPa). De façon générale, l'émulsion effectue des passages successifs dans des échangeurs thermiques à surfaces raclées. Les passages dans les échangeurs thermiques sont entrecoupés de cycles de malaxage.

Finalement, la température de sortie de l'émulsion au terme de l'étape (iv) est comprise entre 5 et 20°C, de préférence entre 10 et 15°C.

En ce qui concerne l'incorporation d'une solution fermentée, par au moins un ferment lactique, d'au moins un substrat à base de glucides, celle-ci peut se faire dans la phase aqueuse, concomitamment à l'étape (ii), dans l'émulsion en cours de cristallisation, concomitamment à l'étape (iv), et/ou dans l'émulsion cristallisée au terme de l'étape (iv).

De préférence, cette étape d'incorporation est réalisée par injection.

De préférence encore, cette incorporation se fait dans l'émulsion en cours de cristallisation, concomitamment à l'étape (iv), ou dans l'émulsion cristallisée au terme de l'étape (iv). Dans ce cadre, cette incorporation peut également intégrer des cycles de malaxage.

En effet, les inventeurs qu'une telle étape d'incorporation est possible à fort taux (jusqu'à 10% du produit fini) et qu'elle permet d'obtenir une émulsion eau-dans-huile qui ne souffre pas de problèmes de déphasage ni d'autres instabilité, à l'inverse de ce qui est observée avec une incorporation de la solution fermentée lors de l'étape de préparation de la phase aqueuse. En outre, il a été observé qu'il était alors plus simple d'obtenir un produit fini présentant la couleur recherchée et également que l'étape de cristallisation s'est avérée moins énergivore.

Selon un autre mode de réalisation particulier, la solution fermentée est soumise à une inactivation physique, avant son incorporation à la phase aqueuse ou à l'émulsion en cours de cristallisation ou à l'émulsion cristallisée.

Une telle inactivation physique peut être effectuée par des techniques bien connues de l'homme du métier, laquelle peut correspondre à une inactivation thermique (par le froid ou la chaleur), par inactivation par irradiation (UV, gamma, ultrasons, ...), par inactivation par dessication, par inactivation par choc osmotique ou encore une inactivation par filtration.

Avantageusement, le volume de solution fermentée incorporé correspond à 1 à 15% du volume final de l'émulsion-eau-dans-huile obtenue, de préférence, le volume de solution fermentée incorporée correspond à 1 à 10 % du volume final de l'émulsion-eau-dans-huile obtenue et, de manière particulièrement préférée, le volume de solution fermentée incorporée correspond à 1 à 8% du volume final de l'émulsion-eau-dans-huile obtenue.

Le substrat à base de glucides destiné à être fermenté, par le ferment lactique, peut être d'origine animale (ex : lait) et/ou végétale (ex : farine).

Par solution d'au moins un substrat à base de glucides, on entend une solution qui comprend entre 2 et 30% en poids (par rapport au poids total de la solution) de substrats à base de glucides, de préférence entre 3 et 25, et très préférée entre 4 et 15% en poids.

De préférence, ladite solution est une solution aqueuse.

Lors de sa préparation et avant sa fermentation, ladite solution d'au moins un substrat à base de glucides est soumis à une stérilisation avant son ensemencement par ledit au moins un ferment lactique. Une telle stérilisation peut être réalisée par des techniques bien connues de l'homme du métier comme la pascalisation ou la pasteurisation.

En vue d'obtenir une solution fermentée, ladite solution à base de glucides est ensemencée par ledit au moins un ferment lactique. Un tel ensemencement peut être réalisé simplement par l'inoculation, de cette solution à base de glucides, par une quantité suffisante dudit au moins un ferment lactique de sorte à initier la fermentation. Si cette quantité est susceptible de varier en fonction du ou des ferments lactiques utilisés, ladite quantité suffisante est typiquement d'au moins 10² CFU/mL, de préférence d'au moins 10³ CFU/mL du ou des ferments lactiques utilisés pour obtenir la solution fermentée.

La solution fermentée correspond à la solution obtenue au terme d'un processus de fermentation anaérobie avec ledit au moins un ferment lactique. Maintenant, ce processus de fermentation s'arrête, préalablement à l'épuisement du substrat, dès lors que le pH de la solution atteint un minimum de l'ordre de pH 5.

Aussi, on entend par solution fermentée, une solution qui a atteint, suite à la fermentation anaérobie du substrat à base de glucides par ledit au moins un ferment lactique, un pH compris dans l'intervalle allant de 4,5 à 6, de préférence une solution dont le pH est compris dans l'intervalle allant de 4,5 et 5,5.

Avantageusement, et lors de ce processus de fermentation anaérobie, après une première phase de mélange, la solution n'est soumise à aucune agitation après au plus 10 minutes suivant l'inoculation de la solution par ledit au moins un ferment lactique, de préférence, la solution n'est soumise à aucune agitation après au plus 5 minutes suivant l'inoculation de la solution par ledit au moins un ferment lactique.

De façon générale, ladite solution fermentée est obtenue au terme d'un processus de fermentation pendant un temps compris entre 6 et 36 heures, de préférence entre 10 et 24 heures et de manière particulièrement préférée entre 10 et 20 heures, et à une température comprise entre 20 et 37°C, de préférence entre 22 et 34°C.

Par « ferment lactique », on entend un microorganisme, bactérie lactique ou levure lactique, qui est capable de former de l'acide lactique, à partir de glucides, lors d'une fermentation anaérobie (en l'absence d'oxygène). De préférence, le ferment lactique est une bactérie lactique.

Les bactéries lactiques sont des bactéries anaérobies à Gram positif. Ces bactéries ont pour habitat de nombreux milieux naturels et accompagnent l'activité humaine en tant que bactéries de la flore commensale des muqueuses et de la flore alimentaire. Les bactéries lactiques appartiennent à :

- l'embranchement des Bacillota et font partie de l'ordre des Lactobacillales comportant les familles Aerococcaceae, Carnobacteriaceae, Enterococcaceae, Lactobacillaceae, Leuconostocaceae et Streptococcaceae.

- l'embranchement des Actinobacteria et font partie de la famille Bifidobacteriaceae appartenant à l'ordre des Bifidobacteriales.

Avantageusement, le au moins un ferment lactique est choisi parmi les bactéries lactiques appartenant au genre *Lactobacillus, Pediococcus, Lactococcus, Streptococcus, Tetragenococcus, Leuconostoc, Oenococcus* ou *Bifidobacterium.*

Avantageusement encore, ledit au moins un ferment lactique appartient à une espèce de bactéries lactiques choisie dans le groupe comprenant *Streptococcus thermophilus, Streptococcus lactis, Streptococcus cremosis, Lactobacillus bulgaricus, Lactobacillus lactis, Lactobacillus rhamnosus, Lactobacillus plantarum, Lactobacillus delbrueckii, Lactobacillus pentosus, Lactobacillus helveticus, Lactobacillus paraplantarum, Lactobacillus paracasei, Lactobacillus johnsonii, Lactobacillus casei*/ *Lactobacillus zeae, Lactobacillus acidophilus, Lactobacillus sanfranciscencis, Lactobacillus curvatus, Lactobacillus amylovorus, Lactobacillus mali, Lactobacillus coryneformis, Lactobacillus xiangfangensis, Lactobacillus diolivorans, Lactobacillus pontis, Lactobacillus rossiae, Lactobacillus hominis, Lactobacillus kunkeei, Lactobacillus sakei, Leuconostoc mesenteroides, Leuconostoc lactis, Leuconostoc dextranicum* et *Leuconostoc cremosis.*

Selon un mode de réalisation particulier, le substrat à base de glucides destiné à être fermenté, par le ferment lactique, est d'origine animale.

A titre de tels substrats d'origine animale, on peut citer le lait, la crème, la poudre de lait, poudre de lactose, de préférence ledit substrat est de la poudre de lait.

Avantageusement, et dans le cas d'un tel substrat d'originale animale, la solution comprend de préférence entre 10 et 25% en poids (par rapport au poids total de la solution) du substrat à base de glucides d'origine animale, de préférence entre 15 et 20% en poids.

Avantageusement, et toujours dans le cas d'un tel substrat d'origine animale, le volume de solution fermentée incorporé correspond à 1 à 5% du volume final de l'émulsion-eau-dans-huile obtenue, de préférence, le volume de solution fermentée incorporée correspond à 1 à 2% du volume final de l'émulsion-eau-dans-huile obtenue.

Avantageusement, et dans le cas substrat d'origine animale, ledit au moins un ferment lactique appartient à une espèce de bactéries lactiques choisie dans le groupe comprenant *Streptococcus thermophilus, Streptococcus lactis, Streptococcus cremosis, Lactobacillus bulgaricus, Lactobacillus lactis, Leuconostoc mesenteroides, Leuconostoc lactis, Leuconostoc dextranicum, Leuconostoc cremosis.*

Selon un mode de réalisation particulier alternatif, le substrat à base de glucides destiné à être fermenté, par le ferment lactique, est d'origine végétale comme l'amidon, l'inuline, le fructose ou encore le glucose.

Les inventeurs ont en effet mis en évidence qu'il était également possible, en utilisant un tel substrat, d'obtenir une émulsion eau-dans-huile aux propriétés organoleptiques particulièrement appréciables.

A titre de tel substrat d'origine végétale on peut citer l'amidon, par exemple un amidon de blé, de pomme de terre, de patate douce, d'avoine, de riz, de maïs, de noix de coco, de soja, de châtaigne, de sorgho ou d'amande.

Un tel amidon peut prendre différentes formes, notamment sous forme de farine ou encore de fécules.

En vue de faciliter la fermentation d'un tel substrat, il peut être utile que l'amidon subisse une hydrolyse, préalable ou concomitante à la fermentation. Une telle hydrolyse peut être effectuée par des techniques bien connues de l'homme du métier, comme une hydrolyse thermique, chimique ou encore enzymatique.

A titre de substrat d'origine végétale, on peut également citer le fructose ou le glucose. Un tel glucose ou fructose peut alors se trouver sous de multiples formes comme de la poudre, du sirop, de lait ou encore du jus.

A Titre d'exemple de jus ou de lait, on peut citer, le jus de soja, le jus de coco, le jus de betterave, le lait de soja, le lait de riz, le lait d'amande, le lait de blé ou encore le lait de châtaigne.

A Titre d'exemple de sirop, on peut citer, le sirop d'agave, le sirop de betterave, le jus de soja, le sirop de canne à sucre, le sirop de soja ou encore le sirop d'érable.

Avantageusement, et dans le cas d'un tel substrat d'origine végétale, la solution comprend de préférence entre 1% et 20% en poids (par rapport au poids total de la solution) du substrat à base de glucide d'origine végétale, de préférence entre 2 et 12% en poids et, de manière particulièrement préférée entre 4 et 10% en poids.

Avantageusement encore, et toujours dans le cas d'un tel substrat d'origine végétale, le volume de solution fermentée incorporé correspond à 2 à 10 % du volume final de l'émulsion eau-dans-huile obtenue, de préférence, le volume de solution fermentée incorporée correspond à 3 à 8% du volume final de l'émulsion-eau-dans-huile obtenue.

Avantageusement, et dans le cas substrat d'origine végétale, ledit au moins un ferment lactique appartient à une espèce de bactéries lactiques choisie dans le groupe comprenant *Streptococcus thermophilus, Lactococcus lactis, Leuconostoc mesenteroides, Lactobacillus bulgaricus, Lactobacillus lactis, Lactobacillus rhamnosus, Lactobacillus plantarum, Lactobacillus delbrueckii, Lactobacillus pentosus, Lactobacillus helveticus, Lactobacillus paraplantarum, Lactobacillus paracasei, Lactobacillus johnsonii, Lactobacillus casei*/ *Lactobacillus zeae, Lactobacillus acidophilus, Lactobacillus sanfranciscencis, Lactobacillus curvatus, Lactobacillus amylovorus, Lactobacillus mali, Lactobacillus coryneformis, Lactobacillus xiangfangensis, Lactobacillus diolivorans, Lactobacillus pontis, Lactobacillus rossiae, Lactobacillus hominis, Lactobacillus kunkeei, Lactobacillus sakei.*

De préférence, ledit au moins un ferment lactique comprend au moins *Lactobacillus rhamnosus* ou *Lactobacillus plantarum* et, de manière particulièrement préférée au moins *Lactobacillus rhamnosus* et *Lactobacillus plantarum.*

Le procédé selon l'invention peut comprendre en outre des étapes complémentaires utilisées classiquement dans la préparation d'une émulsion eau-dans-huile comestible comme une étape de stérilisation, une étape de conditionnement ou encore comme une étape de foisonnement.

La stérilisation de l'émulsion, ou éventuellement de la phase aqueuse, peut être réalisée par des techniques bien connues de l'homme du métier. Cette étape permet d'éliminer les germes pouvant altérer la stabilité microbiologique du produit fini. Une telle stérilisation peut par exemple être réalisée par des techniques d'inactivation physique telles que décrites précédemment et notamment par pasteurisation, pascalisation, ou filtration.

Le foisonnement de l'émulsion cristallisée ou en cours de cristallisation correspond à l'introduction, au sein de l'émulsion eau-dans-huile, d'un gaz inerte de sorte à changer sa texture. Une telle étape de foisonnement peut être réalisée dans tous les types de foisonneurs utilisés dans le domaine agro-alimentaire : les foisonneurs statiques, les foisonneurs à pâles droites et les foisonneurs rotor-stator.

Un deuxième objet de l'invention concerne les émulsions eau-dans-huile susceptibles d'être obtenues par le procédé décrit précédemment et qui incorpore une solution fermentée, par au moins un ferment lactique, d'au moins un substrat à base de glucides.

De préférence, l'émulsion eau-dans-huile présente une phase grasse dont la teneur en matières grasses laitières est inférieure à 50% (en poids par rapport au poids *total* de la phase grasse).

Avantageusement, l'émulsion eau-dans-huile ne comprend pas d'arômes incorporés.

Avantageusement encore, la phase grasse présente une teneur en matières grasses végétales d'au moins 33% (en poids par rapport au poids total de la phase grasse), par exemple d'au moins 40%, de préférence d'au moins 50% et, de manière particulièrement préférée d'au moins 60%.

Selon un mode de réalisation préféré, l'émulsion selon l'invention comprend au moins un ferment lactique tel que défini précédemment, lequel ferment lactique peut être inactivé ou non.

De préférence, ledit au moins un ferment lactique appartient à une espèce de bactéries lactiques choisie dans le groupe comprenant *Streptococcus thermophilus, Streptococcus lactis, Streptococcus cremosis, Lactobacillus bulgaricus, Lactobacillus lactis, Lactobacillus rhamnosus, Lactobacillus plantarum, Lactobacillus delbrueckii, Lactobacillus pentosus, Lactobacillus helveticus, Lactobacillus paraplantarum, Lactobacillus paracasei, Lactobacillus johnsonii, Lactobacillus casei*/ *Lactobacillus zeae, Lactobacillus acidophilus, Lactobacillus sanfranciscencis, Lactobacillus curvatus, Lactobacillus amylovorus, Lactobacillus mali, Lactobacillus coryneformis, Lactobacillus xiangfangensis, Lactobacillus diolivorans, Lactobacillus pontis, Lactobacillus rossiae, Lactobacillus hominis, Lactobacillus kunkeei, Lactobacillus sakei, Leuconostoc mesenteroides, Leuconostoc lactis, Leuconostoc dextranicum* et *Leuconostoc cremosis.*

Avantageusement toujours, l'émulsion-eau-dans-huile comprend un volume de solution fermentée incorporé correspondant à 1 à 15% de son volume final, de préférence, 1 à 10 % de son volume final et, de manière particulièrement préférée, l'émulsion-eau-dans-huile comprend un volume de solution fermentée incorporé correspondant à 1 à 8% de son volume final.

Avantageusement enfin, la solution fermentée a été obtenue par la fermentation d'au moins un substrat à base de glucides d'origine animale (ex : lait) et/ou végétale (ex : farine).

Un troisième objet de l'invention concerne l'utilisation d'une solution fermentée par au moins un ferment lactique, d'au moins un substrat à base de glucides, pour d'obtention d'une émulsion eau-dans-huile dont la phase grasse présente une teneur en matières grasses laitières inférieure à 100% (en poids par rapport au poids total de la phase grasse).

Avantageusement, ladite utilisation est obtenue par l'incorporation dans l'émulsion de ladite solution fermentée se fait au cours de la cristallisation ou après celle-ci.

Les exemples qui suivent sont fournis à titre d'illustration et ne sauraient limiter la portée de la présente invention.

### Exemples

### I. Procédé utilisé pour l'obtention d'une émulsion eau-dans-huile

### Composition de base de l'émulsion eau-dans-huile

La phase grasse était composée d'huile de colza raffinée, d'huile de lin pour garantir un apport en oméga-3 et d'un mélange de corps gras.

La phase grasse comprenait de plus de la lécithine de soja et un émulsifiant composé de mono- et de diglycérides. Ces additifs participent à la formation de l'émulsion et stabilisent le produit.

La phase grasse était également colorée par du β-carotène, mais n'était pas aromatisée (c'est-à-dire qu'elle ne comprenait pas d'arôme).

La phase aqueuse, quant à elle, était composée en majeure partie d'eau (sauf quand un volume de solution fermentée lui était intégré). Maintenant, cette phase aqueuse a été additionné du sel alimentaire pour renforcer le goût de l'émulsion.

### Préparation de l'émulsion eau-dans-huile

La préparation de la phase aqueuse a lieu dans une cuve équipée d'un agitateur.

La phase grasse, quant à elle, est réalisée dans une cuve adaptée pour les phases visqueuses.

La phase aqueuse est incorporée modérément dans la phase grasse, sous agitation, de manière à fabriquer l'émulsion.

L'émulsion ainsi formée est pasteurisée de manière à éliminer les germes pouvant altérer la stabilité microbiologique du produit fini. Le traitement thermique est réalisé dans un échangeur à surface raclée.

### Cristallisation de l'émulsion eau-dans-huile

La cristallisation et le malaxage ont lieu successivement. Le produit passe par des cylindres de refroidissement à surface raclée afin d'amorcer la cristallisation. La régulation des températures est automatisée.

Le refroidissement, entrecoupé d'étapes de malaxage, est réalisé par des cylindres dont les doigts s'entrecroisent pour favoriser l'homogénéisation du produit et l'initiation de la cristallisation.

La cristallisation se poursuit pendant plusieurs jours à 4°C.

### II. Préparation des solutions de substrats

### Solutions de substrat à base de glucides d'origine animale

Les différentes solutions décrites dans le tableau ci-dessous ont été préparées.

**[Tableau 1]**

| Solution | % Poudre de lait (en poids / poids total) | % Matière grasse laitière (en poids / poids total) | Eau |
|---|---|---|---|
| 1 | 30 | 0 | Qsp 100 |
| 2 | 25 | 0 | Qsp 100 |
| 3 | 18 | 0 | Qsp 100 |
| 4 | 13 | 0 | Qsp 100 |
| 5 | 9,2 | 0 | Qsp 100 |
| 6 | 4,1 | 0 | Qsp 100 |
| 7 | 2 | 0 | Qsp 100 |
| 8 | 18 | 2 | Qsp 100 |
| 9 | 9,2 | 2 | Qsp 100 |
| 10 | 4,1 | 2 | Qsp 100 |
| 11 | 18 | 4 | Qsp 100 |
| 12 | 9,2 | 4 | Qsp 100 |
| 13 | 4,1 | 4 | Qsp 100 |
| 14 | 18 | 6 | Qsp 100 |
| 15 | 9,2 | 6 | Qsp 100 |
| 16 | 4,1 | 6 | Qsp 100 |

Ces différentes solutions ont été préparées selon la méthode suivante:

Pour les solutions sans matière grasse laitière :
1. Cuve inox double enveloppe ajout d'eau froide
2. Chauffage eau à 50°C
1. Ajout poudre de lait par dépression -45kPa
3. Mélange 10min 50°C Agitateur 30 RPM racleur 15RPM Turbine rotor stator 900RPM
2. Ajout matière grasse laitière par dépression -45kPa
3. Remise pression cuve à ATM
4. Préchauffage 65°C sur échangeur à plaque
5. Homogénéisation haute pression double étages : étages 1 : 10 MPa; étage 2 : 5 MPa
6. Pasteurisateur à plaque 95°C /chambrage 30S/ pré refroidisseur à plaque 75°C / refroidisseur à plaques : 25 à 44°C en fonction des ferment utilisés
7. Cuve de réception température en fonction des ferments - agitateur centrale 26rpm racleur 8rpm pendant remplissage
8. Fin remplissage - Arrêt agitation

Pour les solutions avec matière grasse laitière :
1. Cuve inox double enveloppe ajout d'eau froide
2. Chauffage eau à 50°C
3. Ajout poudre de lait par dépression -45kPa
4. Mélange 10min 50°C Agitateur 30 RPM racleur 15RPM Turbine rotor stator 900RPM
5. Ajout matière grasse laitière par dépression -45kPa
6. Remise pression cuve à ATM
7. Préchauffage 65°C sur échangeur à plaque
8. Homogénéisation haute pression double étages : étages 1 : 10 MPa; étage 2 : 5 MPa
9. Pasteurisateur à plaque 95°C /chambrage 30S/ pré refroidisseur à plaque 75°C / refroidisseur à plaques : 25 à 44°C en fonction des ferment utilisés
10. Cuve de réception température en fonction des ferments - agitateur centrale 26rpm racleur 8rpm pendant remplissage
11. Fin remplissage - Arrêt agitation

### Solutions de substrat à base de glucides d'origine végétale

Les différentes solutions décrites dans le tableau ci-dessous ont été préparées.

**[Tableau 2]**

| Solution | % Farine d'avoine (en poids / poids total) | % Farine de riz (en poids / poids total) | % Farine de maïs (en poids / poids total) | Eau |
|---|---|---|---|---|
| 17 | 2 | 0 | 0 | Qsp 100 |
| 18 | 4 | 0 | 0 | Qsp 100 |
| 19 | 8 | 0 | 0 | Qsp 100 |
| 20 | 0 | 2 | 0 | Qsp 100 |
| 21 | 0 | 4 | 0 | Qsp 100 |
| 22 | 0 | 8 | 0 | Qsp 100 |
| 23 | 0 | 0 | 2 | Qsp 100 |
| 24 | 0 | 0 | 4 | Qsp 100 |
| 25 | 0 | 0 | 8 | Qsp 100 |
| 26 | 3 | 3 | 3 | Qsp 100 |
| 27 | 4 | 2 | 2 | Qsp 100 |
| 28 | 2 | 4 | 2 | Qsp 100 |
| 29 | 2 | 2 | 4 | Qsp 100 |
| 30 | 4 | 4 | 0 | Qsp 100 |
| 31 | 0 | 4 | 4 | Qsp 100 |
| 32 | 4 | 0 | 4 | Qsp 100 |

Ces différentes solutions ont été préparées selon la méthode suivante :
1. Cuve inox double enveloppe ajout d'eau froide
2. Chauffage eau à 50°C
3. Ajout farines par dépression -45kPa
4. Mélange 10min 50°C Agitateur 30 RPM racleur 15RPM Turbine rotor stator 900RPM
5. Préchauffage 65°C sur échangeur à plaque
6. Homogénéisation haute pression double étages : étages 1 : 10 MPa; étage 2 : 5 MPa
7. Pasteurisateur à plaque 95°C /chambrage 30S/ pré refroidisseur à plaque 75°C / refroidisseur à plaques : 25 à 44°C en fonction des ferment utilisés
8. Cuve de réception température en fonction des ferments - agitateur centrale 26rpm racleur 8rpm pendant remplissage
9. Fin remplissage - Arrêt agitation

### III. Fermentation des solutions fermentées

### Fermentation des solutions de substrat à base de glucides d'origine animale

Les différentes solutions de substrats à base de glucides d'origine animale listées précédemment ont été inoculées par les ferments lactiques décrits dans le tableau ci-dessous.

**[Tableau 3]**

| Solution | Solution de substrats | Ferments lactiques |
|---|---|---|
| 33 | 3 | *Le lactis ssp lactis* |
| | | *Lc lactis ssp cremoris* |
| | | *Lc lactis ssp lactis biovar diacetylactis* |
| | | *Ln mesenteroides* |
| 34 | 3 | *Lc lactis ssp lactis* |
| | | *Lc lactis ssp cremoris* |
| | | *Lc lactis ssp lactis biovar diacetylactis* |
| 35 | 3 | *Lc lactis ssp lactis* |
| | | *Lc lactis ssp lactis biovar diacetylactis* |
| 36 | 3 | *Lc lactis ssp* |
| | | *lactis biovar* |
| | | *diacetylactis* |
| 37 | 3 | *Lb paracasei* |
| 38 | 3 | *Lb casei* |
| 39 | 3 | *Lb acidophilus* |
| 40 | 3 | *Lb johnsonii* |
| 41 | 3 | *Bf lactis* |
| 42 | 3 | *Sc thermophilus* |
| 43 | 3 | *Sc thermophilus* |
| | | *Lb bulgaricus* |
| 44 | 5 | *Lc lactis ssp lactis* |
| | | *Lc lactis ssp cremoris* |
| | | *Lc lactis ssp lactis biovar diacetylactis* |
| | | *Ln mesenteroides* |
| 45 | 5 | *Lc lactis ssp lactis* |
| | | *Lc lactis ssp cremoris* |
| | | *Lc lactis ssp lactis biovar diacetylactis* |
| 46 | 5 | *Lc lactis ssp lactis* |
| | | *Lc lactis ssp lactis biovar diacetylactis* |
| 47 | 5 | *Lc lactis ssp* |
| | | *lactis biovar* |
| | | *diacetylactis* |
| 48 | 5 | *Lb paracasei* |
| 49 | 5 | *Lb casei* |
| 50 | 5 | *Lb acidophilus* |
| 51 | 5 | *Lb johnsonii* |
| 52 | 5 | *Bf lactis* |
| 53 | 5 | *Sc thermophilus* |
| 54 | 5 | *Sc thermophilus* |
| | | *Lb bulgaricus* |
| 55 | 6 | *Lb paracasei* |
| 56 | 6 | *Lb casei* |
| 57 | 6 | *Lb acidophilus* |
| 58 | 6 | *Lb johnsonii* |
| 59 | 6 | *Bf lactis* |
| 60 | 6 | *Sc thermophilus* |

Ces différentes solutions ont été préparées selon la méthode suivante :
1. Cuve de réception avec la solution de glucide d'origine animale température comprise entre 25 et 44°C en fonction des ferments utilisés - Agitateur 26RPM Racleur 8RPM
2. Ajout des ferments par le trou d'homme
3. Mélanges 2min : Agitateur 120RPM Racleur 60RPM
4. Fermentation : 720min - avec ou sans agitateur en fonction du type de ferments
5. Refroidissement 60min - Agitateur 50RPM Racleur 25RPM - T°C cible 5°C
6. Attente dépotage : 5°C - sans agitation - relevé du pH final
7. Remise en température à 11°C pour utilisation en injection - Agitateur 26RPM Racleur 8RPM

### Fermentation des solutions de substrat à base de glucides d'origine végétale

Les différentes solutions de substrats à base de glucides d'origine animale listées précédemment ont été inoculées par les ferments lactiques décrits dans le tableau ci-dessous.

**[Tableau 4]**

| Solution | Solution de substrats | Ferments lactiques |
|---|---|---|
| | 18 | *Lb rhamnosus* |
| 61 | | *Lb plantarum* |
| 62 | 18 | *Lb paracasei* |
| 63 | 18 | *Lb casei* |
| 64 | 18 | *Lb acidophilus* |
| 65 | 18 | *Lb johnsonii* |
| 66 | 18 | *Bf lactis* |
| 67 | 18 | *Sc thermophilus* |
| | 18 | *Sc thermophilus* |
| 68 | | *Lb bulgaricus* |
| 69 | 18 | *Lb paracasei* |
| 70 | 18 | *Lb casei* |
| | 18 | *Lc lactis ssp lactis* |
| | | *Lc lactis ssp cremoris* |
| | | *Lc lactis ssp lactis biovar diacetylactis* |
| 71 | | *Ln mesenteroides* |
| | 18 | *Lc lactis ssp lactis* |
| | | *Lc lactis ssp cremoris* |
| 72 | | *Lc lactis ssp lactis biovar diacetylactis* |
| | 18 | *Lc lactis ssp lactis* |
| 73 | | *Lc lactis ssp lactis biovar diacetylactis* |
| 74 | 18 | *Lc lactis ssp lactis biovar diacetylactis* |
| | 19 | *Lb rhamnosus* |
| 75 | | *Lb plantarum* |
| 76 | 19 | *Sc thermophilus* |
| | 19 | *Sc thermophilus* |
| 77 | | *Lb bulgaricus* |
| | 22 | *Lb rhamnosus* |
| 78 | | *Lb plantarum* |
| 79 | 22 | *Lb paracasei* |
| 80 | 22 | *Lb casei* |
| 81 | 22 | *Lb acidophilus* |
| 82 | 22 | *Lb johnsonii* |
| 83 | 22 | *Bf lactis* |
| 84 | 22 | *Sc thermophilus* |
| | 22 | *Sc thermophilus* |
| 85 | | *Lb bulgaricus* |
| 86 | 22 | *Lb paracasei* |
| 87 | 22 | *Lb casei* |
| | 22 | *Lc lactis ssp lactis* |
| | | *Lc lactis ssp cremoris* |
| | | *Lc lactis ssp lactis biovar diacetylactis* |
| 88 | | *Ln mesenteroides* |
| | 22 | *Lc lactis ssp lactis* |
| | | *Lc lactis ssp cremoris* |
| 89 | | *Lc lactis ssp lactis biovar diacetylactis* |
| | 22 | *Lc lactis ssp lactis* |
| 90 | | *Lc lactis ssp* |
| | | *lactis biovar diacetylactis* |
| 91 | 22 | *Lc lactis ssp lactis biovar diacetylactis* |
| | 25 | *Lb rhamnosus* |
| 92 | | *Lb plantarum* |
| 93 | 25 | *Lb paracasei* |
| 94 | 25 | *Lb casei* |
| 95 | 25 | *Lb acidophilus* |
| 96 | 25 | *Lb johnsonii* |
| 97 | 25 | *Bf lactis* |
| 98 | 25 | *Sc thermophilus* |
| | 25 | *Sc thermophilus* |
| 99 | | *Lb bulgaricus* |
| 100 | 25 | *Lb paracasei* |
| 101 | 25 | *Lb casei* |
| | 25 | *Lc lactis ssp lactis* |
| | | *Lc lactis ssp cremoris* |
| | | *Lc lactis ssp lactis biovar diacetylactis* |
| 102 | | *Ln mesenteroides* |
| | 25 | *Lc lactis ssp lactis* |
| | | *Lc lactis ssp cremoris* |
| 103 | | *Lc lactis ssp lactis biovar diacetylactis* |
| | 25 | *Lc lactis ssp lactis* |
| 104 | | *Lc lactis ssp lactis biovar diacetylactis* |
| 105 | 25 | *Lc lactis ssp lactis biovar diacetylactis* |
| | 26 | *Lb rhamnosus* |
| 106 | | *Lb plantarum* |
| 107 | 26 | *Lb paracasei* |
| 108 | 26 | *Lb casei* |
| 109 | 26 | *Lb acidophilus* |
| 110 | 26 | *Lb johnsonii* |
| 111 | 26 | *Bf lactis* |
| 112 | 26 | *Sc thermophilus* |
| | 26 | *Sc thermophilus* |
| 113 | | *Lb bulgaricus* |
| 114 | 26 | *Lb paracasei* |
| 115 | 26 | *Lb casei* |
| | 26 | *Lc lactis ssp lactis* |
| | | *Lc lactis ssp cremoris* |
| | | *Lc lactis ssp lactis biovar diacetylactis* |
| 116 | | *Ln mesenteroides* |
| | 26 | *Lc lactis ssp lactis* |
| | | *Lc lactis ssp cremoris* |
| 117 | | *Lc lactis ssp lactis biovar diacetylactis* |
| | 26 | *Lc lactis ssp lactis* |
| 118 | | *Lc lactis ssp lactis biovar diacetylactis* |
| 119 | 26 | *Lc lactis ssp lactis biovar diacetylactis* |

Ces différentes solutions ont été préparées selon la méthode suivante :
1. Cuve de réception avec la solution de glucides d'origine végétale température comprise entre 25 et 44°C en fonction des ferments utilisés - Agitateur 26RPM Racleur 8RPM.
2. Ajout des ferments par le trou d'homme
3. Mélanges 2min : Agitateur 120RPM Racleur 60RPM
4. Fermentation : 720min - avec ou sans agitateur en fonction du type de ferments
5. Refroidissement 60min - Agitateur 50RPM Racleur 25RPM - T°C cible 5°C
6. Attente dépotage : 5°C - sans agitation - relevé du pH final
7. Remise en température à 11°C pour utilisation en injection - Agitateur 26RPM Racleur 8RPM

### IV. Incorporation des solutions fermentées

### Incorporation des solutions fermentées à la phase aqueuse

Différentes solutions fermentées listées précédemment ont été incorporées à la phase aqueuse par ajout comme composé au pourcentage ci-dessous remplaçant à 1 :1 la fraction d'eau. Ce processus d'incorporation a utilisé différentes proportions, 10%,25% et 50% par rapport au volume final de l'émulsion eau-dans-huile) listées dans le tableau ci-dessous.

### Incorporation des solutions fermentées en cours ou après la cristallisation

Différentes solutions fermentées listées précédemment ont été incorporées dans la ligne de cristallisation par injection en ligne, puis mélange par un mélangeur à bâton rotatif à une vitesse comprise entre 70 RPM à 1000RPM en fonction de la composition de l'émulsion. Ce processus d'incorporation a utilisé différentes proportions (0,5%, 2%, et 5% par rapport au volume final de l'émulsion eau-dans-huile) listées dans le tableau ci-dessous.

### V. Détermination des propriétés organoleptiques des émulsions eau-dans-huile obtenues

Une analyse sensorielle a été réalisée après la production de l'émulsion eau-dans-huile et qui a consisté en une appréciation du gout, de l'aspect, de la texture en bouche et de l'odeur des produits testés.

A titre d'exemple, les propriétés organoleptiques perçues pour une margarine végétale (comprenant 49% d'huiles végétales, de l'eau et un émulsifiant) additionnée ou non d'une solution fermentée à base de glucides d'origine animale (0,7% de poudre de lait écrémé) ou à base de glucides d' origine végétale (0,7% de farine d'avoine) sont listées dans le tableau ci-dessous. Dans ce tableau, les valeurs sont d'autant plus élevées que la perception des propriétés associées est forte.

**[Tableau 5]**

| Propriété | Margarine non additionnée | Margarine additionnée d'une solution fermentée (animale) | Margarine additionnée d'une solution fermentée (végétale) | Effet de l'addition de la solution fermentée |
|---|---|---|---|---|
| Fermeté | 4,6 | 6,50 | 5,83 | ++ |
| Collant | 5,4 | 3,88 | 4,67 | ++ |
| Fondant | 5,4 | 6,00 | 5,83 | + |
| Note beurre | 2 | 3,13 | 3,00 | + |
| Note crème | 1,4 | 2,13 | 2,00 | + |
| Note huile | 3,6 | 2,63 | 3,00 | + |
| Couleur | 4,8 | 5,50 | 4,67 | +/- |
| Brillance | 2,4 | 2,00 | 1,67 | +/- |
| Sableux | 2,2 | 1,25 | 1,50 | +/- |
| Gras | 5,2 | 4,75 | 5,17 | +/- |
| Salé | 4,4 | 4,00 | 3,67 | +/- |
| Frais | 4,00 | 3,75 | 3,83 | +/- |
| Vieille huile | 1,4 | 1,00 | 1,00 | +/- |
| Carton | 1,4 | 1,13 | 2,00 | +/- |
| Longueur en bouche | 3,8 | 4,38 | 4,17 | +/- |
| Arrière goût | 1,8 | 1,75 | 1,17 | +/- |

| | | | | |
|---|---|---|---|---|
| (++) différences très significatives entre les produits, (+) différences significatives entre les produits, (+/-) significativité à confirmer. | | | | |

Les résultats ont montré que le procédé selon l'invention permet d'obtenir des émulsions présentant une perception améliorée. On notera ainsi que les deux émulsions présentant un ajout d'une solution fermentée (avec des glucides d'origine animale ou végétale) présentaient, par rapport à l'émulsion de référence, une meilleure fermeté, un meilleur fondant et un moindre collant, de même que des notes de beurre et de crème améliorée avec, simultanément, une moindre perception de la note huile.

En outre, les résultats ont montré que l'intégration de la solution fermentée en fin de process (lors de la cristallisation ou postérieurement) revêtait un intérêt particulier. Ainsi, l'intégration de la solution fermentée à la phase aqueuse a été vecteur d'instabilité de l'émulsion obtenue, a en outre compliqué l'obtention d'une couleur adaptée (couleur de plus en plus prononcée et tire vers le vert) pour le produit final et a surtout rendu plus difficile l'étape de cristallisation (augmentation du malaxage requis). A l'inverse, l'intégration de la solution fermentée en cours de cristallisation ou après celle-ci a pu être réalisé à fort taux (jusqu'à 10% du produit fini), sans entraîner de déphasage ni d'autres instabilité. En outre, les qualités organoleptiques obtenues sont telles qu'elles permettent l'adjonction d'une moindre quantité de solution fermentée (par rapport à l'addition de la solution fermentée à l'étape de préparation de la phase aqueuse) pour obtenir une intensité des arômes équivalente ou supérieure.

Des résultats complémentaires en lien avec les notes aromatiques relevées 10 jours après fabrication pour différentes formulations (du tableau 4) sont listées ci-après.

**[Tableau 6]**

| Solution | Solution de substrats | Ferments lactiques | Note aromatiques |
|---|---|---|---|
| 61 | 18 | *Lb rhamnosus Lb plantarum* | *laitière*/ *crémière puis végétal* |
| 63 | 18 | *Lb casei* | *végétal céréalière* |
| 64 | 18 | *Lb acidophilus* | *végétal céréalière* |
| 66 | 18 | *Bf lactis* | *végétal puis laitière mais très doux* |
| 67 | 18 | *Sc thermophilus* | *Acidité importante* /*gout de végétaux fermenté* |
| 68 | 18 | *Sc thermophilus Lb bulgaricus* | *laitière*/*yaourt fermenté végétale* |
| | 18 | *Lc lactis ssp lactis* | *Saveur beurré*/ *végétale*/*fromage affiné* |
| | | *Lc lactis ssp cremoris* | |
| | | *Lc lactis ssp lactis biovar diacetylactis* | |
| 71 | | *Ln mesenteroides* | |
| | 18 | *Lc lactis ssp lactis* | *Saveur beurré*/*crème*/ *lait fermenté* /*légèrement végétale* |
| | | *Lc lactis ssp cremoris* | |
| 72 | | *Lc lactis ssp lactis biovar diacetylactis* | |
| | 18 | *Lc lactis ssp lactis* | *note beurre, pas de note d'huile ni de rémanence végétale* |
| 73 | | *Lc lactis ssp lactis biovar diacetylactis* | |
| | 19 | *Lb rhamnosus* | *laitière*/*crémière puis végétal* |
| 75 | | *Lb plantarum* | |
| 76 | 19 | *Sc thermophilus* | *note de céréalel fermentaire acide* |
| | 19 | *Sc thermophilus* | *yaourt fermenté végétale*/*amande*/*cr ème* |
| 77 | | *Lb bulgaricus* | |
| | 22 | *Lb rhamnosus* | *saveur crème*/*subtile végétale* |
| 78 | | *Lb plantarum* | |
| | 22 | *Lc lactis ssp lactis* | *Notes de beurre et végétales avec un arrière-goût de fromage affiné.* |
| | | *Lc lactis ssp cremoris* | |
| | | *Lc lactis ssp lactis biovar diacetylactis* | |
| 88 | | *Ln mesenteroides* | |
| | 22 | *Lc lactis ssp lactis* | *note beurre subtile, végétal & légèrement acide* |
| | | *Lc lactis ssp cremoris* | |
| 89 | | *Lc lactis ssp lactis biovar diacetylactis* | |
| | 22 | *Lc lactis ssp lactis* | *note beurre, végétale & légèrement acide* |
| 90 | | *Lc lactis ssp lactis biovar diacetylactis* | |
| | 25 | *Lb rhamnosus* | *note de crème & lait, rémanence végétale* |
| 92 | | *Lb plantarum* | |
| 98 | 25 | *Sc thermophilus* | note huile / fermentaire acide +++ |
| | 25 | *Sc thermophilus* | note crème, yaourt puis rémanence végétal légèrement acidulé |
| 99 | | *Lb bulgaricus* | |
| | 25 | *Lc lactis ssp lactis* | note de fromage affiné et de végétaux fermenté |
| | | *Lc lactis ssp cremoris* | |
| | | *Lc lactis ssp lactis biovar diacetylactis* | |
| 102 | | *Ln mesenteroides* | |
| | 25 | *Lc lactis ssp lactis* | Saveur de beurrée note de céréale |
| | | *Lc lactis ssp cremoris* | |
| 103 | | *Lc lactis ssp lactis biovar diacetylactis* | |
| | 25 | *Lc lactis ssp lactis* | note laitière/ végétal fermenté/ céréale |
| 104 | | *Lc lactis ssp lactis biovar diacetylactis* | |
| | 25 | *Lc lactis ssp lactis* | note laitière |
| 105 | | *biovar diacetylactis* | |
| | 26 | *Lb rhamnosus* | note de crème & lait, rémanence végétale |
| 106 | | *Lb plantarum* | |
| 109 | 26 | *Lb acidophilus* | note végétale / note fermentaire |
| | | | rémanence d'acidité lactique |
| 112 | 26 | *Sc thermophilus* | Arômes de céréales avec une acidité fermentaire prononcée. |
| | 26 | *Sc thermophilus* | note crème, yaourt puis rémanence végétale légèrement acidulé |
| 113 | | *Lb bulgaricus* | |
| | 26 | *Lc lactis ssp lactis* | note de fromage affiné et de végétaux fermentés |
| | | *Lc lactis ssp cremoris* | |
| | | *Lc lactis ssp lactis biovar diacetylactis* | |
| 116 | | *Ln mesenteroides* | |
| | 26 | *Lc lactis ssp lactis* | Saveur de yaourt fermenté avec des notes d'amande et de crème. |
| | | *Lc lactis ssp cremoris* | |
| 117 | | *Lc lactis ssp lactis biovar diacetylactis* | |
| | 26 | *Lc lactis ssp lactis* | Saveur de yaourt fermenté avec des notes d'amande et de crème. |
| 118 | | *Lc lactis ssp lactis biovar diacetylactis* | |
| 119 | 26 | *Lc lactis ssp lactis biovar diacetylactis* | Saveur légèrement laitière et fermentaire avec note végétale rémanente |

Ces résultats ont permis de montrer qu'il a été possible d'obtenir des émulsions eau-dans-huile aux qualités organoleptiques appréciables en utilisant une grande variété de substrats végétaux, de même qu'une grande variété de bactéries lactiques.

Il est à noter que les espèces *Lb rhamnosus* et *Lb plantarum* ont permis d'obtenir de très bons résultats avec l'ensemble des substrats végétaux. Aussi, ces eux espèces devraient être privilégiés, éventuellement en combinaison avec d'autres espèces, pour l'obtention de margarine aux propriétés organoleptiques particulièrement intéressantes. A noter également que la farine d'avoine a donné des résultats particulièrement intéressant, même si le riz et le maïs ont permis d'obtenir des émulsions aux propriétés organoleptiques appréciables.

## Revendications

1. Un Procédé d'obtention d'une émulsion eau-dans-huile, ledit procédé comprenant les étapes de :
(i) Préparation d'une phase grasse ;
(ii) Préparation d'une phase aqueuse ;
(iii) Incorporation de la phase aqueuse obtenue à l'étape (ii) dans la phase grasse obtenue à l'étape (i) sous agitation pour créer une émulsion ; et
(iv) Cristallisation de l'émulsion obtenue à l'étape (iii) ;
**Caractérisé en ce que :**
- le procédé comprend en outre au moins une étape d'incorporation d'une solution fermentée par au moins un ferment lactique, d'au moins un substrat à base de glucides ; et
- la phase grasse présente une teneur en matières grasses laitières inférieure à 100% (en poids par rapport au poids total de la phase grasse).

2. Le procédé selon la revendication précédente, **caractérisé en ce que** l'incorporation de la solution fermentée par au moins un ferment lactique, d'au moins un substrat à base de glucides, se fait dans l'émulsion au cours de la cristallisation, concomitamment à l'étape (iv), ou dans l'émulsion cristallisée au terme de l'étape (iv).

3. Le procédé selon l'une quelconque des revendications précédentes, **caractérisé en ce que** la phase grasse présente une teneur en matières grasses végétales d'au moins 33% (en poids par rapport au poids total de la phase grasse), par exemple d'au moins 40%, de préférence d'au moins 50% et, de manière particulièrement préférée d'au moins 60%.

4. Le procédé selon l'une quelconque des revendications précédentes, **caractérisé en ce que** le volume de solution fermentée incorporé correspond à 1 à 15% du volume final de l'émulsion-eau-dans-huile obtenue, de préférence, le volume de solution fermentée incorporée correspond à 1 à 10% du volume final de l'émulsion-eau-dans-huile obtenue.

5. Le procédé selon l'une quelconque des revendications précédentes, **caractérisé en ce que** la solution d'au moins un substrat à base de glucides comprend entre 2 et 30% en poids (par rapport au poids total de la solution) de substrats à base de glucides, de préférence entre 3 et 25% en poids et, de manière particulièrement préférée entre 4 et 15% en poids.

6. Le procédé selon l'une quelconque des revendications précédentes, **caractérisé en ce que** la solution fermentée correspond à la solution qui a atteint, suite à la fermentation anaérobie du substrat à base de glucides par ledit au moins un ferment lactique, un pH compris dans l'intervalle allant de 4,5 à 6, de préférence une solution dont le pH est compris dans l'intervalle allant de 4,5 et 5,5.

7. Le procédé selon l'une quelconque des revendications précédentes, **caractérisé en ce que** le ferment lactique est une bactérie lactique choisie dans le groupe comprenant les bactéries appartenant à:
- l'embranchement des Bacillota et font partie de l'ordre des Lactobacillales comportant les familles Aerococcaceae, Carnobacteriaceae, Enterococcaceae, Lactobacillaceae, Leuconostocaceae et Streptococcaceae ;
- l'embranchement des Actinobacteria et font partie de la famille *Bifidobacteriaceae* appartenant à l'ordre des Bifidobacteriales.

8. Le procédé selon la revendication précédente, **caractérisé en ce que** le ferment lactique est une bactérie lactique choisie dans le groupe comprenant *Streptococcus thermophilus, Streptococcus lactis, Streptococcus cremosis, Lactobacillus bulgaricus, Lactobacillus lactis, Lactobacillus rhamnosus, Lactobacillus plantarum, Lactobacillus delbrueckii, Lactobacillus pentosus, Lactobacillus helveticus, Lactobacillus paraplantarum, Lactobacillus paracasei, Lactobacillus johnsonii,*
*Lactobacillus casei*/ *Lactobacillus zeae, Lactobacillus acidophilus, Lactobacillus sanfranciscencis, Lactobacillus curvatus, Lactobacillus amylovorus, Lactobacillus mali, Lactobacillus coryneformis, Lactobacillus xiangfangensis, Lactobacillus diolivorans, Lactobacillus pontis, Lactobacillus rossiae, Lactobacillus hominis, Lactobacillus kunkeei, Lactobacillus sakei, Leuconostoc mesenteroides, Leuconostoc lactis, Leuconostoc dextranicum* et *Leuconostoc cremosis.*

9. Le procédé selon l'une quelconque des revendications précédentes, **caractérisé en ce que** le substrat à base de glucides destiné à être fermenté, par le ferment lactique, est d'origine animale comme le lait, la crème, la poudre de lait ou la poudre de lactose.

10. Le procédé selon l'une quelconque des revendications précédentes, **caractérisé en ce que** le substrat à base de glucides destiné à être fermenté, par le ferment lactique, est d'origine végétale comme l'amidon, l'inuline, le fructose ou encore le glucose.

11. Une émulsion eau-dans-huile susceptible d'être obtenue par l'une quelconque des revendications précédentes, **caractérisé en ce qu'**elle incorpore une solution fermentée par au moins un ferment lactique, d'au moins un substrat à base de glucides.

12. Une utilisation, d'une solution fermentée par au moins un ferment lactique, d'au moins un substrat à base de glucides, pour l'obtention d'une émulsion eau-dans-huile dont la phase grasse présente une teneur en matières grasses laitières inférieure à 100% (en poids par rapport au poids total de la phase grasse).

13. L'utilisation selon la revendication 12, **caractérisée en ce qu'**elle est obtenue par l'incorporation dans l'émulsion de ladite solution fermentée se fait au cours de la cristallisation ou après celle-ci
